# EUROPEAN PATENT APPLICATION

(11) **EP 2 511 728 A1**
(43) Date of publication of application: **17.10.2012**
(21) Application number: 12163814.2
(22) Date of filing: 11.04.2012
(51) Int. Cl.: G01S 5/02, B60L 11/18, B60R 25/10

(54) **Method and system for producing a detectable electromagnetic signal for tracking locations of an electric vehicle**

(30) Priority: 14.04.2011 US 201113086915
(71) Applicant: General Electric Company, Schenectady, NY 12345 (US)
(72) Inventor: Boot, John Christopher, Atlanta, GA Georgia 30339 (US); Alexander, George William, Atlanta, GA Georgia 30339 (US)
(74) Representative: Picker, Madeline Margaret

(57) **Abstract**

Embodiments of the invention described herein use an electromagnetic signal produced by a switch mode power supply (SMPS) (202) to track locations of an electric vehicle (EV) (102). In one aspect, a method of tracking an EV (102) is described. This embodiment of a method comprises receiving an actuation signal (304); and adjusting a SMPS (202) in response to the actuation signal (304) such that the switch mode power supply (202) generates a detectable electromagnetic signal (208). The SMPS (202) is used to provide alternating-current (AC) power to an electric motor (106) of an electric vehicle (EV) (102) or is used to provide direct-current (DC) power to a battery (104) of the EV (102).

## Description

### BACKGROUND OF THE INVENTION

EVs (electric vehicles, which include PEVs (plug-in electric vehicles) and PHEVs (plug-in hybrid electric vehicles)) use batteries as a source of energy at least part of the time while in operation. These batteries discharge during use and are required to be recharged on an intermittent basis. In some instances, this charging occurs while the vehicle is being operated through a process commonly referred to as regenerative braking whereby the electric motor used to drive the vehicle acts as a generator while braking or coasting. When this is being performed, the alternating-current (AC) energy generated by the motor must be converted to direct-current (DC) energy to charge the battery of the EV. In many instances, this is performed by a switch mode power supply (SMPS). SMPS can also be used in EVs to invert DC power to AC power, and to rectify (DC-DC) DC power. SMPS, by their nature, produce electromagnetic signals while operating.

Car theft is problematic. In some instances, the battery of an EV has a tremendous after-market value, therefore EVs are being stolen to sell the parts separately. While there are systems and devices that can be installed on a vehicle to track a vehicle after it has been reported as stolen, these systems and devices are expensive and can be readily identified and disabled by the thief. However, if the device emitting the tracking signal was a part of the EV, the thief could not easily identify or remove the device.

Therefore, systems and methods are desired that overcome challenges in the art, some of which are described above. Specifically, systems and methods of tracking an EV using an electromagnetic signal produced by the SMPS of the EV are desired.

### BRIEF DESCRIPTION OF THE INVENTION

Described herein are embodiments of systems and methods of producing a detectable electromagnetic signal by an EV that can be used to track locations of the EV.

In one aspect, a method of tracking an EV is described. This embodiment of a method comprises receiving an actuation signal; and adjusting a SMPS in response to the actuation signal such that the switch mode power supply generates a detectable electromagnetic signal. The SMPS is used to provide alternating-current (AC) power to an electric motor of an electric vehicle (EV) or is used to provide direct-current (DC) power to a battery of the EV.

In another aspect, a method of tracking an EV is described. This embodiment of a method comprises sending an actuation signal to an EV, wherein the actuation signal causes a SMPS in the EV to generate a detectable electromagnetic signal; and tracking locations of the EV using the detectable electromagnetic signal. The SMPS is used to provide alternating-current (AC) power to an electric motor of the EV or is used to provide direct-current (DC) power to a battery of the EV.

In another aspect, a system for is described. This embodiment of a system comprises a SMPS, wherein the switch mode power supply is used to provide alternating-current (AC) power to an electric motor of an electric vehicle (EV) or is used to provide direct-current (DC) power to a battery of the EV; and a processor, wherein the processor is configured to: receive an actuation signal; and adjust the switch mode power supply in response to the actuation signal such that the switch mode power supply generates a detectable electromagnetic signal.

In yet another aspect, a system for tracking an EV is described. This embodiment of a system comprises a transmitter, wherein the transmitter sends an actuation signal to an electric vehicle (EV), wherein the actuation signal causes a SMPS in the EV to generate a detectable electromagnetic signal; and a receiver, wherein the receiver receives the detectable electromagnetic signal and tracks locations of the EV using the detectable electromagnetic signal, wherein the SMPS is used to provide alternating-current (AC) power to an electric motor of the EV or is used to provide direct-current (DC) power to a battery of the EV.

Additional advantages will be set forth in part in the description which follows or may be learned by practice. The advantages will be realized and attained by means of the elements and combinations particularly pointed out in the appended claims. It is to be understood that both the foregoing general description and the following detailed description are example and explanatory only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 is a block diagram of some components of an example electric vehicle (EV);
FIG. 2 is an illustration of an embodiment of a system for tracking an EV;
FIG. 3 is an illustration of an example system for wirelessly transmitting an actuation signal to an EV;
FIG. 4 is an illustration of an alternate example system for wirelessly transmitting an actuation signal to an EV and tracking the locations of the EV;
FIG. 5 is yet another illustration of an alternate example system for wirelessly transmitting an actuation signal to an EV and tracking the locations of the EV;
FIG. 6A illustrates the frequency emitted by the SMPS of an EV when operating under normal operating conditions (e.g., the SMPS is performing AC-DC conversion, DC-AC inversion, or DC-DC conversion while the EV is being operated in a normal manner) compared to a frequency of a detectable electromagnetic signal;
FIG. 6B is another illustration the frequency emitted by the SMPS of an EV when operating under normal operating conditions (e.g., the SMPS is performing AC-DC conversion, DC-AC inversion, or DC-DC conversion while the EV is being operated in a normal manner) compared to a frequency of a detectable electromagnetic signal;
FIG. 6C is another illustration of how the electromagnetic signal emitted by the SMPS of an EV when operating under normal operating conditions (e.g., the SMPS is performing AC-DC conversion, DC-AC inversion, or DC-DC conversion while the EV 102 is being operated in a normal manner) can be "stuttered" or otherwise altered to form a repetitive pattern 608 that can comprise a detectable electromagnetic signal;
FIG. 7 illustrates a schematic block diagram of an entity capable of operating as an EMS, in accordance with one embodiment of the present invention;
FIG. 8 is a flowchart illustrating a method of practicing an embodiment of the present invention;
FIG. 9 is a block diagram illustrating an example operating environment for performing the disclosed methods; and
FIG. 10 is a flowchart illustrating a method of practicing an embodiment of the present invention.

### DETAILED DESCRIPTION OF EMBODIMENTS OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint. Further, when examples of ranges are provided herein, it is to be appreciated that the given ranges also include all subranges therebetween, unless specifically stated otherwise.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Example" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

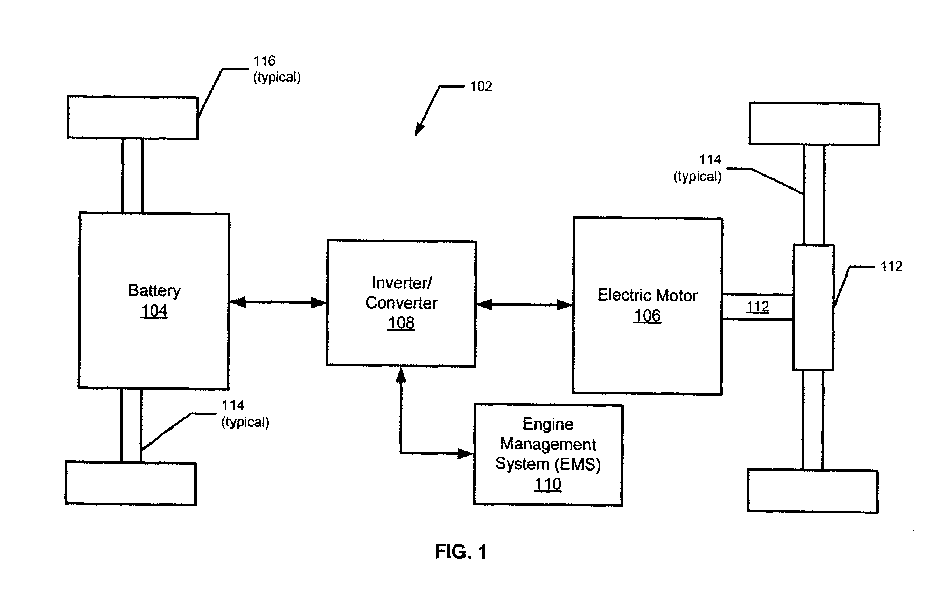

FIG. 1 is a block diagram of some components of an example electric vehicle (EV) 102. As noted herein, EVs include PEVs (plug-in electric vehicles) and PHEVs (plug-in hybrid electric vehicles). The example EV 102 is comprised of an energy source such as a battery 104 and an electric motor 106. In some instances, the motor 106 can be a direct-current (DC) electric motor, as known to one of ordinary skill in the art, but in many instances the motor 106 is an alternating-current (AC) electric motor. In some instances, the motor 106 can be a poly-phase AC motor, such as a three-phase AC motor. If the motor 106 is an AC motor, then in one aspect an inverter/converter 108 can be used to convert DC electrical power from the battery 104 to AC electrical power for the motor 106. Furthermore, in one aspect, the EV 102 can incorporate a regenerative braking scheme whereby when the EV is braking or coasting, the motor 106 can act as an electrical generator and be used to charge the battery 104. In such a scheme, the inverter/convertor 108 converts the AC electrical energy created by the motor 106 during braking or coasting to DC electrical energy for charging the battery 104. An inverter/controller 108 can be comprised of one or more switch mode power supplies (SMPS) that are generally used for AC-to-DC conversion and DC-to-DC conversion (buck or boost). An SMPS is an electronic power supply that incorporates a switching regulator in order to be highly efficient in the conversion of electrical power. Like other types of power supplies, an SMPS transfers power from a source like the electric motor 106 (when acting as a generator) to the battery 104 while converting voltage and current characteristics. Unlike a linear power supply, the power electronics of a switching mode supply switches very quickly (typically between 50 kHz and 1 MHz) between full-on and full-off states, which minimizes wasted energy. Voltage regulation is provided by varying the ratio of on to off time, which can be performed by a control that includes a clock mechanism for switching the power electronics on and off. In contrast, a linear power supply must dissipate the excess voltage to regulate the output. This higher efficiency is the chief advantage of a switch-mode power supply. SMPS are used as replacements for the linear regulators when higher efficiency, smaller size or lighter weight are required. They are, however, more complicated, their switching currents cause electromagnetic signals that can create electromagnetic interference, and simple designs may have a poor power factor.

Further comprising the embodiment shown in FIG. 1 is an engine management system (EMS) 110 that can be used to control and monitor the battery 104, electric motor 106, and inverter/converter 108 including controlling the switching of the power electronics of the SMPS, controlling the speed of the motor 106, controlling whether the inverter/controller 108 is in driving or braking mode, and monitoring battery 104 life. Also comprising the embodiment of an EV 102 shown in FIG. 1 is a drive train 112, axles 114 and wheels/tires 116.

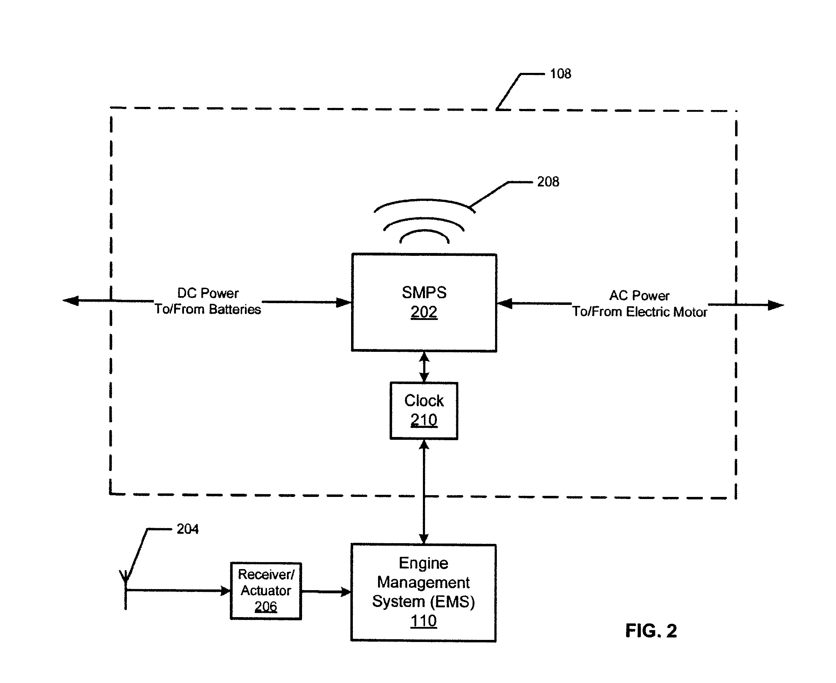

FIG. 2 is an illustration of an embodiment of a system for tracking an EV 102. The example system is comprised of a switch mode power supply 202. As shown in FIG. 2, the SMPS 202 emits an electromagnetic signal that is caused by the switching of the power electronics that comprise the SMPS 202. In one aspect, the electromagnetic signal emitted by the SMPS 202 is at a frequency of the clock-speed for switch in the electronics, or a multiple thereof. In one aspect, the dominant frequency of the emitted electromagnetic signal while the EV 102 is operating normally can be referred to as the normal operating frequency of the SMPS 202. In one aspect, the EV 102 can be considered to be operating normally when the EV 102 is being operated such that the EV is moving in either a forward or reverse direction. Therefore, the EV 102 is considered to be operating normally when the SMPS 202 is used to provide AC power to the electric motor 106 of the EV 102, or is used to provide DC power to the battery 104 of the EV 102. Further comprising the system of FIG. 2 is the EMS 110, as described herein. In one aspect, the EMS 110 comprises a processor. In one aspect, the processor is configured to wirelessly receive an actuation signal via an antenna 204 and a receiver/actuator 206. In one aspect, the processor is configured to receive the actuation signal via the antenna 204 and the receiver/actuator 206 from a satellite. In one aspect, the processor is configured to receive the actuation signal via the antenna 204 and the receiver/actuator 206 from a cellular telephone system. In one aspect, in response to the received actuation signal, the processor adjusts the SMPS 202 such that the SMPS 202 generates a detectable electromagnetic signal 208. In one aspect, adjusting the SMPS 202 in response to the actuation signal such that the SMPS 202 generates a detectable electromagnetic signal comprises the processor of the EMS 110 adjusting the clock-speed of the clock 210 that controls the switching of the power electronics of the SMPS 202 such that the SMPS 202 emits a detectable electromagnetic signal 208 that is different from the electromagnetic signal generated by the SMPS 202 when operating normally. In one aspect, the processor is configured to generate a detectable electromagnetic signal 208 that is higher in frequency than the electromagnetic signal generated by the SMPS 202 when operating normally. In another aspect, the processor is configured to generate a detectable electromagnetic signal 208 that is lower in frequency than the electromagnetic signal generated by the SMPS 202 when operating normally. In yet another aspect, the processor is configured to generate a detectable electromagnetic signal 208 that has a repetitive pattern that is not present in the electromagnetic signal generated by the SMPS 202 when operating normally.

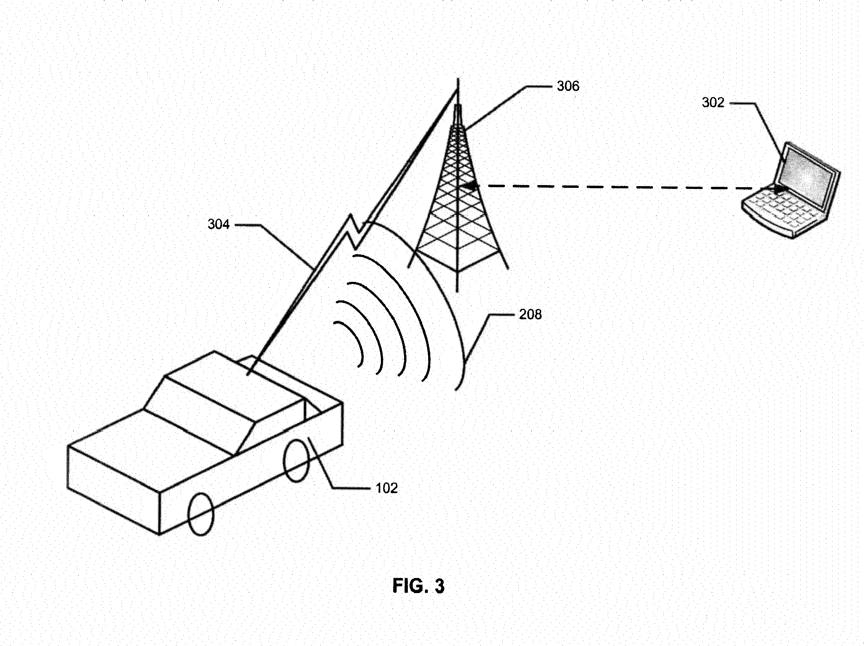

FIG. 3 is an illustration of an example system for wirelessly transmitting an actuation signal to an EV 102. For example, the EV 102 may have been reported as stolen, therefore it may be desired to cause the EV 102 to emit a detectable electromagnetic signal 208 that can be used to track the locations of the EV 102. As shown in FIG. 3, computing device 302 causes an actuation signal 304 to be wirelessly transmitted to the EV 102. The actuation signal 304 causes a SMPS in the EV 102 to generate a detectable electromagnetic signal 208. The SMPS in the EV 102 is used to provide AC power to an electric motor of the EV 102, or is used to provide DC power to a battery of the EV 102. The actuation signal 304 can be transmitted in various forms including RF, digital, etc. For example, in one aspect and as shown in FIG. 3, the wireless actuation signal 304 can comprise a signal from a cellular telephone system 306, in which case the signal 304 is received by a cellular receiver within the EV 102, thus causing the EMS of the EV 102 to generate a detectable electromagnetic signal 208. Receivers, which can be positioned on the cellular telephone system infrastructure 306, alongside roadways, on or in buildings, or in other vehicles can detect and determine the strength of the detectable electromagnetic signal 208. This information can be transmitted back to the computing device 302 or used for tracking locations of the EV 102 using the detectable electromagnetic signal 208.

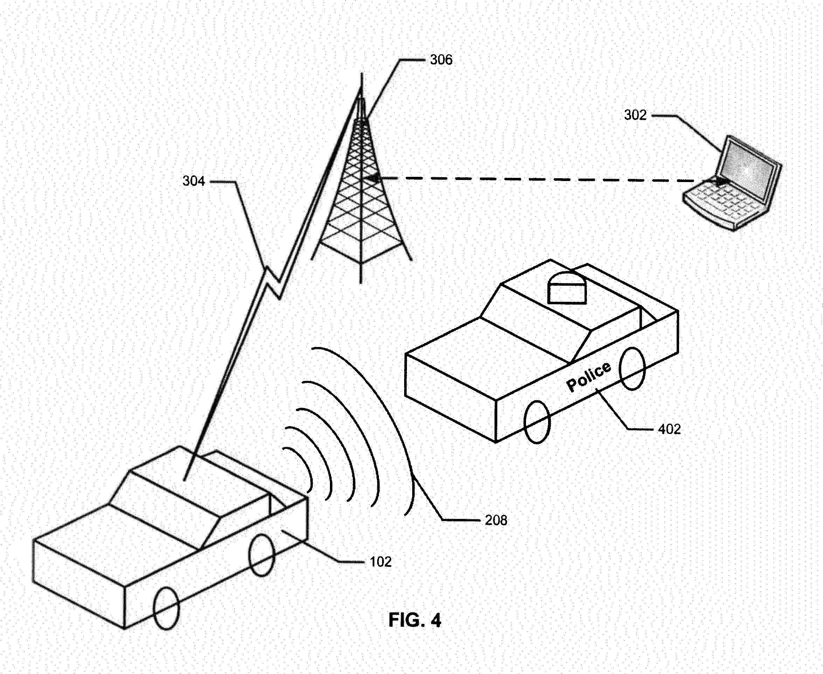

FIG. 4 is an illustration of an alternate example system for wirelessly transmitting an actuation signal to an EV 102 and tracking the locations of the EV 102. As shown in FIG. 4, a second vehicle 402 (e.g., a police vehicle) is equipped with a receiver that can detect the detectable electromagnetic signal 208. In this manner, the second vehicle 402 can determine its proximity to the EV 102 by the strength of the signal 208. Alternatively, one or more receivers can be positioned on the cellular telephone system infrastructure 306, alongside roadways, on or in buildings and can detect and determine the strength of the detectable electromagnetic signal 208. This information can be transmitted back to the computing device 302, where location information about the EV can be relayed to the second vehicle 402, or to other persons and/or devices.

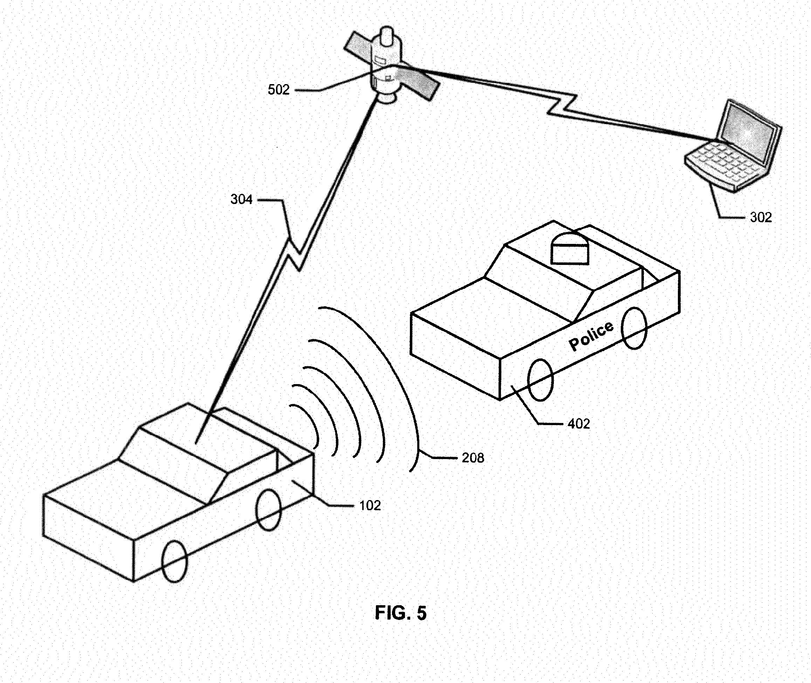

FIG. 5 is yet another illustration of an alternate example system for wirelessly transmitting an actuation signal to an EV 102 and tracking the locations of the EV 102. As shown in FIG. 5, computing device 302 causes an actuation signal 304 to be wirelessly transmitted to the EV 102. The actuation signal 304 causes a SMPS in the EV 102 to generate a detectable electromagnetic signal 208. The SMPS in the EV 102 is used to provide AC power to an electric motor of the EV 102, or is used to provide DC power to a battery of the EV 102. The actuation signal 304 can be transmitted in various forms including RF, digital, etc. For example, in one aspect and as shown in FIG. 5, the wireless actuation signal 304 can comprise a signal from a satellite 502, in which case the signal 304 is received by a satellite receiver within the EV 102, thus causing the EMS of the EV 102 to cause the SMPS to generate a detectable electromagnetic signal 208. Receivers, which can be positioned on the cellular telephone system infrastructure 306, alongside roadways, on or in buildings, or in other vehicles 402 can detect and determine the strength of the detectable electromagnetic signal 208. This information can be transmitted back to the computing device 302 or used for tracking locations of the EV 102 using the detectable electromagnetic signal 208.

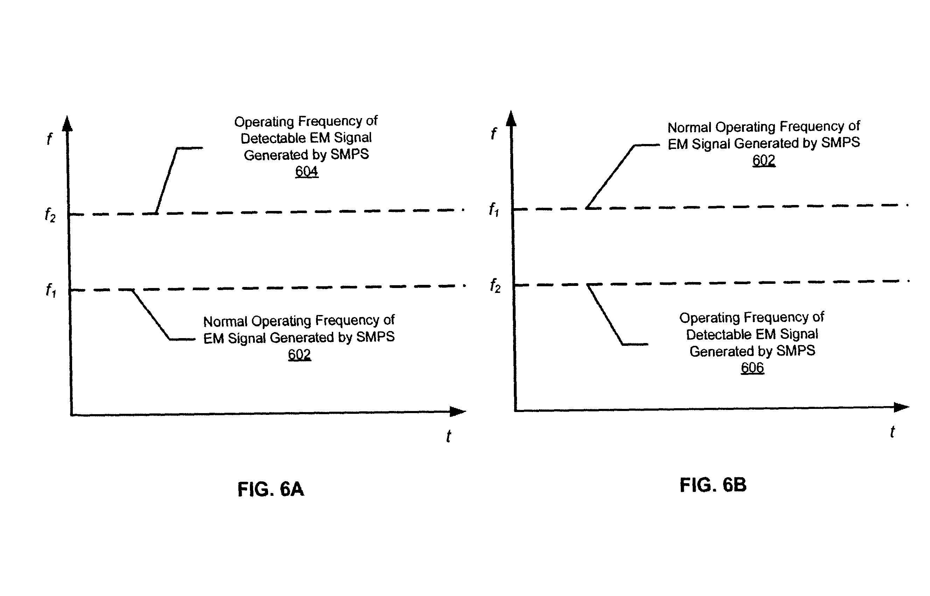

FIG. 6A illustrates the frequency emitted by the SMPS of an EV 102 when operating under normal operating conditions (e.g., the SMPS is performing AC-DC conversion, DC-AC inversion, or DC-DC conversion while the EV 102 is being operated in a normal manner) compared to a frequency of a detectable electromagnetic signal. For example, under normal operating conditions, the SMPS of EV 102 emits an electromagnetic signal having normal operating frequency (*f₁*) 602. After receiving an actuation signal, the SMPS of the EV 102 can be adjusted such that the SMPS emits a detectable electromagnetic signal having an operating frequency (*f₂*) 604 that is higher in frequency than the normal operating frequency (*f₁*) 602. In this way, the detectable electromagnetic signal can be discerned from the normal electromagnetic signal. Further, the SMPS of the EV can be adjusted such that the operating frequency 604 of the detectable EM signal is at a frequency so that electromagnetic interference from other sources can be minimized. In one aspect, the SMPS of the EV 102 is adjusted by a processor that comprises a part of the EMS of the EV 102.

FIG. 6B is another illustration the frequency emitted by the SMPS of an EV 102 when operating under normal operating conditions (e.g., the SMPS is performing AC-DC conversion, DC-AC inversion, or DC-DC conversion while the EV 102 is being operated in a normal manner) compared to a frequency of a detectable electromagnetic signal. For example, under normal operating conditions, the SMPS of EV 102 emits an electromagnetic signal having normal operating frequency (*f₁*) 602. After receiving an actuation signal, the SMPS of the EV 102 can be adjusted such that the SMPS emits a detectable electromagnetic signal having an operating frequency (*f₂*) 606 that is lower in frequency than the normal operating frequency (*f₁*) 602. In this way, the detectable electromagnetic signal can be discerned from the normal electromagnetic signal. Further, the SMPS of the EV can be adjusted such that the operating frequency 606 of the detectable EM signal is at a frequency so that electromagnetic interference from other sources can be minimized. In one aspect, the SMPS of the EV 102 is adjusted by a processor that comprises a part of the EMS of the EV 102.

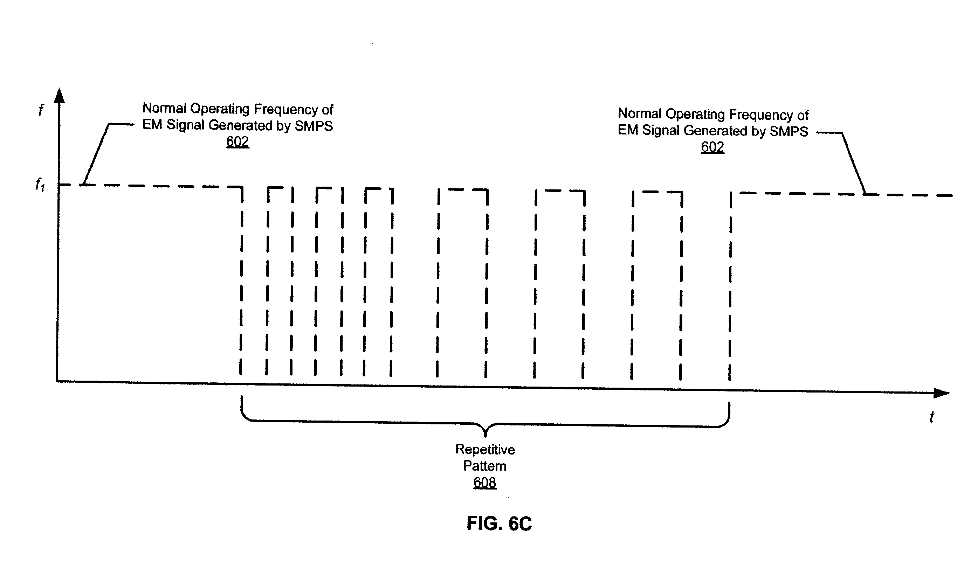

FIG. 6C is another illustration of how the electromagnetic signal emitted by the SMPS of an EV 102 when operating under normal operating conditions (e.g., the SMPS is performing AC-DC conversion, DC-AC inversion, or DC-DC conversion while the EV 102 is being operated in a normal manner) can be "stuttered" or otherwise altered to form a repetitive pattern 608 that can comprise a detectable electromagnetic signal. For example, under normal operating conditions, the SMPS of EV 102 emits an electromagnetic signal having normal operating frequency (*f₁*) 602. After receiving an actuation signal, the SMPS of the EV 102 can be adjusted such that the SMPS emits a detectable electromagnetic signal whereby the normal signal is altered in a manner to create a repetitive pattern 608 such that the detectable electromagnetic signal can be discerned from the normal electromagnetic signal. The example shown in FIG. 6C indicates that the normal signal is "stuttered" to form a repetitive pattern 608 of three short pulses followed by three longer pulses followed by a time period in which only the normal signal is generated by the SMPS. FIG. 6C is example only, and other types of repetitive patterns are contemplated within the scope of this invention. In one aspect, the SMPS of the EV 102 is adjusted to form the repetitive pattern 608 by a processor that comprises a part of the EMS of the EV 102.

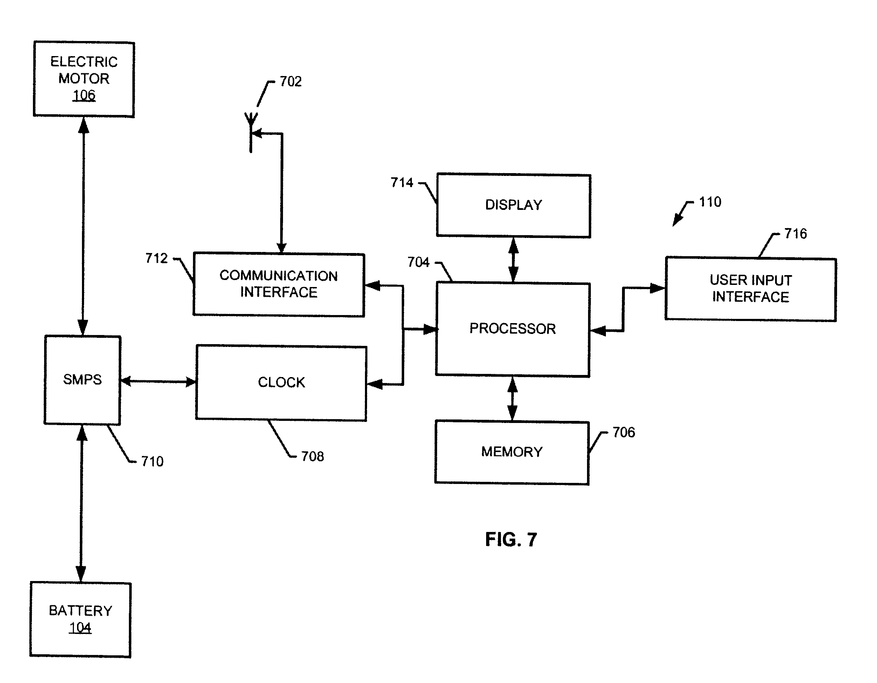

Referring now to FIG. 7, a schematic block diagram of an entity capable of operating as an EMS 110 is shown in accordance with one embodiment of the present invention. The entity capable of operating as an EMS 110 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as an EMS 110 can generally include means, such as one or more processors 704 for performing or controlling the various functions of the entity. As shown in FIG. 7, in one embodiment, EMS 110 can comprise a clock 708 that is controlled by the one or more processors 704. The clock 708, in turn, controls the firing of one or more power electronics that comprise a switch mode power supply (SMPS) 710. The SMPS 710 is used to provide AC power to an electric motor 106 of the EV 102, or is used to provide DC power to a battery 104 of the EV 102.

In one embodiment, the one or more processors 704 are in communication with or include memory 706, such as volatile and/or non-volatile memory that stores content, data or the like. For example, the memory 706 may store content transmitted from, and/or received by, the entity. Also for example, the memory 706 may store software applications, instructions or the like for the one or more processors 704 to perform steps associated with operation of the entity in accordance with embodiments of the present invention. In particular, the one or more processors 704 may be configured to perform the processes discussed in more detail herein for tracking an EV 102. The processor 704 can be configured for receiving an actuation signal. In response to receiving the actuation signal, the one or more processors 704 can be configured to adjust the SMPS 710 such that the SMPS 710 generates a detectable electromagnetic signal. In one aspect, the detectable electromagnetic signal can be used for tracking locations of the EV 102. In one aspect, the processor 704 is configured to cause the SMPS 710 to generate a detectable electromagnetic signal that is different from the electromagnetic signal generated by the SMPS 710 when operating normally. For example, in one instance, the processor 704 can be configured to cause the SMPS 710 to generate a detectable electromagnetic signal that is higher in frequency than the electromagnetic signal generated by the SMPS 710 when operating normally. In another example instance, the processor 704 is configured to cause the SMPS 710 to generate a detectable electromagnetic signal that is lower in frequency than the electromagnetic signal generated by the SMPS 710 when operating normally. In yet another example instance, the processor 704 is configured to cause the SMPS 710 to generate a detectable electromagnetic signal that has a repetitive pattern that is not present in the electromagnetic signal generated by the SMPS 710 when operating normally.

In addition to the memory 706, the one or more processors 704 can also be connected to at least one interface or other means for displaying, transmitting and/or receiving data, content or the like. In this regard, the interface(s) can include at least one communication interface 712 or other means for transmitting and/or receiving data, content or the like. In one aspect, the communication interface 712 can be used to receive a wirelessly transmitted actuation signal via an antenna 702. In response to receiving the actuation signal, the one or more processors 704 can be configured to adjust the SMPS 710 such that the SMPS 710 generates a detectable electromagnetic signal. In one aspect, the wirelessly transmitted actuation signal comprises an actuation signal received from a satellite. In another aspect, the wirelessly-transmitted actuation signal comprises an actuation signal received from a cellular telephone system, though other means of transmitting the actuation signal are contemplated within the scope if the described invention. The interface(s) can also include at least one user interface that can include a display 714 and/or a user input interface 716. In one aspect, the communication interface 712 can be used to transfer data or receive commands from and transfer information to a remote computing device 302 such as the one described herein over a wireless network. In one aspect, the communication interface 712 can comprise a wireless communication interface such as a Wi-Fi transceiver. The user input interface 716, in turn, can comprise any of a number of devices allowing the entity to receive data from a user, such as a keypad, a touch display, a joystick or other input device.

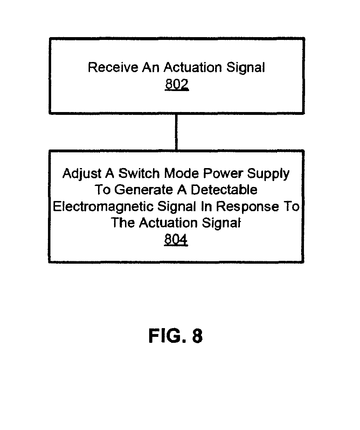

FIG. 8 is a flowchart illustrating a method of practicing an embodiment of the present invention. The described method comprises an embodiment of a method of tracking an electric vehicle (EV) using an electromagnetic signal generated by an SMPS associated with the EV. At step 802, an actuation signal is received. In one aspect, receiving the actuation signal comprises receiving the actuation signal from a satellite. In another aspect, receiving the actuation signal comprises receiving the actuation signal from a cellular telephone system.

At step 804, A SMPS is adjusted to generate a detectable electromagnetic signal in response to the actuation signal. In one aspect, the SMPS generates an electromagnetic signal when operating normally and adjusting the SMPS in response to the actuation signal such that the SMPS generates a detectable electromagnetic signal comprises adjusting the SMPS such that it generates a detectable electromagnetic signal that is different from the electromagnetic signal generated by the SMPS when operating normally. In one aspect, generating the detectable electromagnetic signal that is different from the electromagnetic signal generated by the SMPS when operating normally comprises generating the detectable electromagnetic signal that is higher in frequency than the electromagnetic signal generated by the SMPS when operating normally. In another aspect, generating the detectable electromagnetic signal that is different from the electromagnetic signal generated by the SMPS when operating normally comprises generating the detectable electromagnetic signal that is lower in frequency than the electromagnetic signal generated by the SMPS when operating normally. In yet another aspect, generating the detectable electromagnetic signal that is different from the electromagnetic signal generated by the SMPS when operating normally comprises generating the detectable electromagnetic signal that has a repetitive pattern that is not present in the electromagnetic signal generated by the SMPS when operating normally.

In one aspect, the method further comprises tracking locations of the EV using the detectable electromagnetic signal.

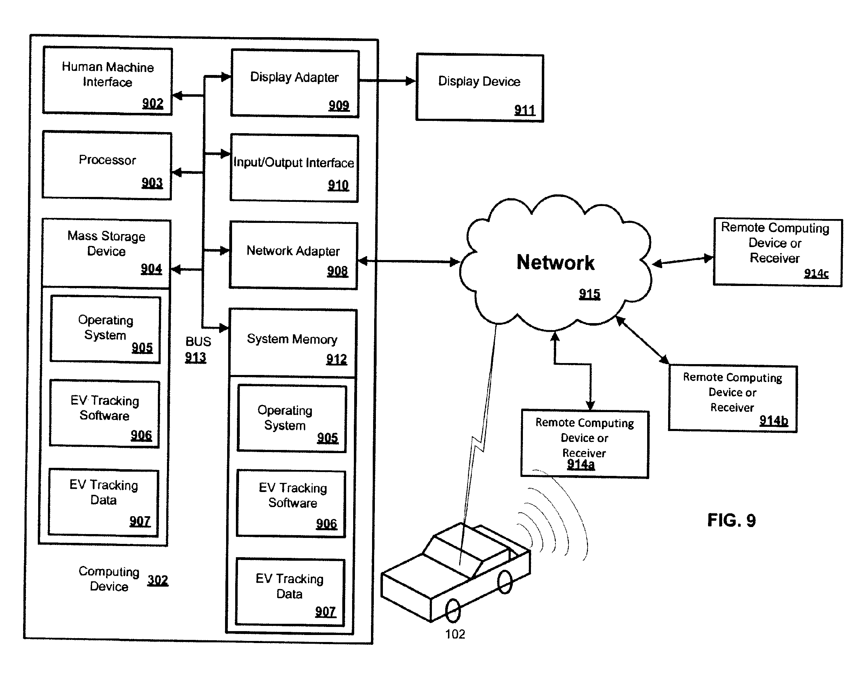

The above system has been described above as comprised of units (e.g., the EV 102, the inverter/converter 108, the battery 104, the electric motor 106, the EMS 110, the computing device 302, etc.) One skilled in the art will appreciate that this is a functional description and that software, hardware, or a combination of software and hardware can perform the respective functions. A unit, such as the inverter/converter 108, the EMS 110, the computing device 302,, etc., can be software, hardware, or a combination of software and hardware. The units can comprise the EV tracking software 906 as illustrated in FIG. 9 and described below. Reference is now made to FIG. 9, which illustrates one type of electronic device that would benefit from embodiments of the present invention. As shown, the electronic device may be a computing device 302.

FIG. 9 is a block diagram illustrating an example operating environment for performing the disclosed methods. This example operating environment is only an example of an operating environment and is not intended to suggest any limitation as to the scope of use or functionality of operating environment architecture. Neither should the operating environment be interpreted as having any dependency or requirement relating to any one or combination of components illustrated in the example operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise machine monitoring systems, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device 302. The components of the computing device 302 can comprise, but are not limited to, one or more processors or processing units 903, a system memory 912, and a system bus 913 that couples various system components including the processor 903 to the system memory 912. In the case of multiple processing units 903, the system can utilize parallel computing.

The system bus 913 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 913, and all buses specified in this description can also be implemented over a wired or wireless network connection and each of the subsystems, including the processor 903, a mass storage device 904, an operating system 905, EV tracking software 906, EV tracking data 907, a network adapter 908, system memory 912, an Input/Output Interface 910, a display adapter 909, a display device 911, and a human machine interface 902, can be contained within one or more remote computing devices or receivers 914a,b,c at physically separate locations, connected through buses of this form, in effect implementing a fully distributed system or distributed architecture.

The computing device 302 typically comprises a variety of computer readable media. Example readable media can be any available media that is non-transitory and accessible by the computing device 302 and comprises, for example and not meant to be limiting, both volatile and non-volatile media, removable and non-removable media. The system memory 912 comprises computer readable media in the form of volatile memory, such as random access memory (RAM), and/or non-volatile memory, such as read only memory (ROM). The system memory 912 typically contains data such as EV tracking data 907 and/or program modules such as operating system 905 and EV tracking software 906 that are immediately accessible to and/or are presently operated on by the processing unit 903.

For example, the memory 912 may store content transmitted from, and/or received by, the computing device 302. Also for example, the memory 912 may store software applications, instructions or the like for the one or more processors 903 to perform steps associated with operation of the entity in accordance with embodiments of the present invention. In particular, the one or more processors 903 may be configured to perform the processes discussed in more detail herein for tracking an EV 102 using an electromagnetic signal generated by the EV 102. In one aspect, the process comprises the processor 903 causing an actuation signal to be sent to an EV 102. This activation signal is sent over a wireless network 915. The actuation signal causes a SMPS in the EV 102 to generate a detectable electromagnetic signal. The SMPS is used to provide AC power to an electric motor of the EV 102 or is used to provide DC power to a battery of the EV 102. The process further comprises tracking locations of the EV 102 using the detectable electromagnetic signal. For example, the receivers or other computing devices 914a,b,c can detect the detectable electromagnetic signal generated by the SMPS of the EV 102 and transmit the locations of the EV 102 back to the computing device 302. The strength of the detectable electromagnetic signal can also be transmitted to the computing device 302, which can be used to determine a direction of travel of the EV 102.

In another aspect, the computing device 302 can also comprise other non-transitory, removable/non-removable, volatile/non-volatile computer storage media. By way of example, FIG. 9 illustrates a mass storage device 904 that can provide non-volatile storage of computer code, computer readable instructions, data structures, program modules, and other data for the computing device 302. For example and not meant to be limiting, a mass storage device 904 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 904, including by way of example, an operating system 905 and EV tracking software 906. Each of the operating system 905 and EV tracking software 906 (or some combination thereof) can comprise elements of the programming and the EV tracking software 906. EV tracking data 907 can also be stored on the mass storage device 904. EV tracking data 907 can be stored in any of one or more databases known in the art. Examples of such databases comprise, DB2® (IBM Corporation, Armonk, NY), Microsoft® Access, Microsoft® SQL Server, (Microsoft Corporation, Bellevue, Washington), Oracle®, (Oracle Corporation, Redwood Shores, California), mySQL, PostgreSQL, and the like. The databases can be centralized or distributed across multiple systems.

In another aspect, the user can enter commands and information into the computing device 302 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit 903 via a human machine interface 902 that is coupled to the system bus 913, but can be connected by other interface and bus structures, such as a parallel port, game port, an IEEE 1394 Port (also known as a Firewire port), a serial port, or a universal serial bus (USB).

In yet another aspect, a display device 911 can also be connected to the system bus 913 via an interface, such as a display adapter 909. It is contemplated that the computing device 302 can have more than one display adapter 909 and the computing device 302 can have more than one display device 911. For example, a display device can be a monitor, an LCD (Liquid Crystal Display), or a projector. In addition to the display device 911, other output peripheral devices can comprise components such as speakers (not shown) and a printer (not shown), which can be connected to the computing device 302 via Input/Output Interface 910. Any step and/or result of the methods can be output in any form to an output device. Such output can be any form of visual representation, including, but not limited to, textual, graphical, animation, audio, tactile, and the like.

The computing device 302 can operate in a networked environment using logical connections to one or more remote computing devices or receivers 914a,b,c. By way of example, a remote computing device 914 can be a personal computer, portable computer, a server, a router, a network computer, a vendor or manufacture's computing device, an electric vehicle charging station (EVCS), peer device or other common network node, and so on. Logical connections between the computing device 302 and a remote computing device or receiver 914a,b,c can be made via a local area network (LAN) and a general wide area network (WAN). Such network connections can be through a network adapter 908. A network adapter 908 can be implemented in both wired and wireless environments. Such networking environments are conventional and commonplace in offices, enterprise-wide computer networks, intranets, and other networks 915 such as the Internet.

For purposes of illustration, application programs and other executable program components such as the operating system 905 are illustrated herein as discrete blocks, although it is recognized that such programs and components reside at various times in different storage components of the computing device 302, and are executed by the data processor(s) of the computing device 302. An implementation of EV tracking software 906 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Example computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

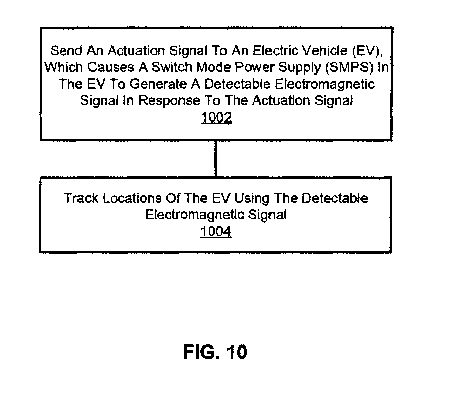

FIG. 10 is a flowchart illustrating a method of practicing an embodiment of the present invention. The described method comprises an embodiment of a method of tracking an electric vehicle (EV) using an electromagnetic signal generated by an SMPS associated with the EV. At step 1002, an actuation signal is sent to an EV. In one aspect, sending the actuation signal comprises sending the actuation signal from a satellite. In another aspect, sending the actuation signal comprises sending the actuation signal from a cellular telephone system. The actuation signal causes a SMPS in the EV to generate a detectable electromagnetic signal in response to the actuation signal. In one aspect, the SMPS generates an electromagnetic signal when operating normally and in response to the actuation signal the SMPS is adjusted such that it generates a detectable electromagnetic signal that is different from the electromagnetic signal generated by the SMPS when operating normally. In one aspect, generating the detectable electromagnetic signal that is different from the electromagnetic signal generated by the SMPS when operating normally comprises generating the detectable electromagnetic signal that is higher in frequency than the electromagnetic signal generated by the SMPS when operating normally. In another aspect, generating the detectable electromagnetic signal that is different from the electromagnetic signal generated by the SMPS when operating normally comprises generating the detectable electromagnetic signal that is lower in frequency than the electromagnetic signal generated by the SMPS when operating normally. In yet another aspect, generating the detectable electromagnetic signal that is different from the electromagnetic signal generated by the SMPS when operating normally comprises generating the detectable electromagnetic signal that has a repetitive pattern that is not present in the electromagnetic signal generated by the SMPS when operating normally.

At step 1004, locations of the EV are tracked using the detectable electromagnetic signal.

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 704 discussed above with reference to FIG. 7 or the one or more processors 903 discussed above with reference to FIG. 9, to produce a machine, such that the instructions which execute on the computer or other programmable data processing apparatus create a means for implementing the functions specified in the flowchart block or blocks.

These computer program instructions may also be stored in a non-transitory computer-readable memory that can direct a computer or other programmable data processing apparatus (e.g., the one or more processors 704 discussed above with reference to FIG. 7 or the one or more processors 903 discussed above with reference to FIG. 9) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method of tracking an electric vehicle (102) comprising:
receiving an actuation signal (304); and
adjusting a switch mode power supply (202) in response to the actuation signal (304) such that the switch mode power supply (202) generates a detectable electromagnetic signal (208),
wherein the switch mode power supply (202) is used to provide alternating-current (AC) power to an electric motor (106) of an electric vehicle (EV) (102) or is used to provide direct-current (DC) power to a battery (104) of the EV (102).

2. The method of Claim 1, further comprising tracking locations of the EV (102) using the detectable electromagnetic signal (208).

3. The method of Claim 1 or Claim 2, wherein the switch mode power supply (202) generates an electromagnetic signal when operating normally (602) and adjusting the switch mode power supply (202) in response to the actuation signal (304) such that the switch mode power supply (202) generates a detectable electromagnetic signal (208) comprises adjusting the switch mode power supply (202) such that it generates the detectable electromagnetic signal (208) that is different from the electromagnetic signal generated by the switch mode power supply (202) when operating normally.

4. The method of Claim 3, wherein generating the detectable electromagnetic signal (208) that is different from the electromagnetic signal generated by the switch mode power supply (202) when operating normally comprises one of:
generating the detectable electromagnetic signal (208) that is higher in frequency than the electromagnetic signal generated by the switch mode power supply (202) when operating normally;
generating the detectable electromagnetic signal that is lower in frequency than the electromagnetic signal generated by the switch mode power supply (202) when operating normally; and
generating the detectable electromagnetic signal (208) that has a repetitive pattern that is not present in the electromagnetic signal generated by the switch mode power supply (202) when operating normally.

5. The method of any one of Claims 1 to 4, wherein receiving the actuation signal (304) comprises receiving the actuation signal from a satellite or from a cellular telephone system.

6. A method of tracking an electric vehicle comprising:
sending an actuation signal (304) to an electric vehicle (EV) (102), wherein the actuation signal causes a switch mode power supply (202) in the EV to generate a detectable electromagnetic signal; and
tracking locations of the EV using the detectable electromagnetic signal (208),
wherein the switch mode power supply (202) is used to provide alternating-current (AC) power to an electric motor (106) of the EV or is used to provide direct-current (DC) power to a battery (104) of the EV.

7. A system for tracking an electric vehicle (102) comprising:
a switch mode power supply (202), wherein the switch mode power supply (202) is used to provide alternating-current (AC) power to an electric motor (106) of an electric vehicle (EV) (102) or is used to provide direct-current (DC) power to a battery (104) of the EV (102); and
a processor (704), wherein the processor (704) is configured to:
receive an actuation signal (304); and
adjust the switch mode power supply (202) in response to the actuation signal (304) such that the switch mode power supply (202) generates a detectable electromagnetic signal (208).

8. The system of Claim 7, further comprising a receiver, wherein the receiver receives the detectable electromagnetic signal (208) and is used for tracking locations of the EV (102).

9. The system of Claim 7 or Claim 8, wherein the switch mode power supply (202) generates an electromagnetic signal when operating normally and the processor (704) is configured to adjust the switch mode power supply (202) such that it generates the detectable electromagnetic signal (208) that is different from the electromagnetic signal generated by the switch mode power supply (202) when operating normally.

10. The system of Claim 9, wherein the processor (704) is configured to generate the detectable electromagnetic signal (208) that is higher in frequency than the electromagnetic signal generated by the switch mode power supply (202) when operating normally, or generate a detectable electromagnetic signal (208) lower in frequency than the electromagnetic signal generated by the switch mode power supply (202) when operating normally, or generate a detectable electromagnetic signal (208) that has a repetitive pattern that is not present in the electromagnetic signal generated by the switch mode power supply (202) when operating normally.

11. The system of any one of Claims 7 to 10, wherein the processor is configured to receive the actuation signal from a satellite or from a cellular telephone system.

12. A system for tracking an electric vehicle comprised of:
a transmitter, wherein the transmitter sends an actuation signal (304) to an electric vehicle (EV) (102), wherein the actuation signal causes a switch mode power supply (202) in the EV to generate a detectable electromagnetic signal (208); and
a receiver, wherein the receiver receives the detectable electromagnetic signal (208) and tracks locations of the EV using the detectable electromagnetic signal,
wherein the switch mode power supply (202) is used to provide alternating-current (AC) power to an electric motor (106) of the EV or is used to provide direct-current (DC) power to a battery (104) of the EV (102).

13. The system of Claim 12 further comprising a processor operably connected with e SMPA, wherein the processor is configured to cause the switch mode power supply (202) to generate the detectable electromagnetic signal (208) that is different from the electromagnetic signal generated by the switch mode power supply when operating normally.

14. The system of Claim 13, wherein the processor is configured to cause the switch mode power supply (202) to generate the detectable electromagnetic signal that is higher in frequency than the electromagnetic signal generated by the switch mode power supply when operating normally, or is lower in frequency than the electromagnetic signal generated by the switch mode power supply (202) when operating normally, or that has a repetitive pattern that is not present in the electromagnetic signal generated by the switch mode power supply (202) when operating normally.

15. The system of Claim 12, 13 or 14, wherein the actuation signal (304) is sent to the EV (102) from a satellite, or from a cellular telephone system.
